# EUROPEAN PATENT SPECIFICATION

(11) **EP 1 296 565 B1**
(45) Date of publication and mention of the grant of the patent: **23.08.2006**
(21) Application number: 01936395.1
(22) Date of filing: 23.05.2001
(51) Int. Cl.: A23K 1/00, A23K 1/18

(54) **FOODSTUFF FOR PETS**
FUTTER FÜR HAUSTIERE
PRODUIT ALIMENTAIRE POUR ANIMAUX FAMILIERS

(30) Priority: 26.05.2000 ZA 200002655
(43) Date of publication of application: 02.04.2003
(73) Proprietor: SOCIETE DES PRODUITS NESTLE S.A., 1800 Vevey (CH)
(72) Inventor: ENGLISH, Paul Martin, 0169 Highveld (ZA)
(74) Representative: Lock, Graham James
(86) International application number: PCT/EP2001/005961
(87) International publication number: WO 2001/091578

(56) References cited:
- EP-A- 0 862 863
- FR-A- 2 083 217
- US-A- 4 211 797
- US-A- 4 743 461

## Description

### Field of the invention

**THIS INVENTION** relates to a foodstuff for pets or other animals and to a method of forming such foodstuff. It also provides for the visible attachment of nutrition to a food body for ingestion by a pet.

### Background to the invention

Dried pet foods are well known in the pet food industry. They may broadly be categorised as pellets or kibbles, which are generally intended to be fed as a complete meal, and biscuits, which are more often fed between meals or as a supplement to meals. Biscuit treats tend to be larger in size than kibbles or pellets, but the term "biscuit" is commonly used interchangeably and in relation to dry pet food in general.

United States patents US 4,743,460 and US 4,743,461 disclose a dry, soft canine biscuit that displays visually apparent, discrete particles that contain meat, meat by-products, farinaceous material or textured vegetable protein. These particles are distributed throughout the biscuit body in a substantially uniform manner.

It is found that there is a need for a dry pet food that visibly provides nutrition or at least conveys, by appearance, that it contains nutritive particles.

FR 2083 217 discloses edible dog biscuits having microcapsules applied to the surface and/or interior thereof. The microcapsules are very small relative to the surface and/or volume over which they are distributed.

US 4 211 797 discloses a dry dog food having a homogenous coating of tallow, enzyme lipolyzed tallow and a proteolytic enzyme digest of beef. The coating is characterized by its continuous nature. No visibly discrete particles can be distinguished.

EP 0862 863 discloses a pet food, which contains a coating or filling of a probiotic micro-organism. As before, coatings are characterised by their continuous nature and no visibly discrete particles can be distinguished.

### Summary of invention

The invention is defined by the claims. There is provided a foodstuff for pets or other animals, which foodstuff is in the form of a biscuit, and includes a body of a body substance having a core, a surface zone at least partially surrounding the core, and nutritive particles visibly in contrast with the body substance embedded in distributed relationship in the surface zone to be visibly exposed at at least one surface of the body and covering between one fifth and four-fifths of said surface, the core of the body substance being homogenous. By homogenous is meant that the core does not contain said nutritive particles.

The nutritive particles may be fully embedded such that they, generally, do not protrude from an outer surface of the body. In use, a large plurality of biscuits are packaged together, and having the nutritive particles flush with a general surface of the body will render the nutritive particles less prone to being rubbed off, yet the nutritive particles will remain fully visible.

The nutritive particles are preferably small in cross section compared to a cross dimension of the surface, e.g. smaller than one third, preferably smaller than one fifth of a smaller or smallest cross dimension of said surface.

Although the nutritive particles cover between one fifth and four fifths, they preferably cover between about two fifths and about three fifths of said surface.

The nutritive particles preferably simulate a predetermined nutritive entity, e.g. it may be similar to said predetermined entity in respect of any one or more of colour, shape, size, texture, or the like. The body substance may preferably be of homogeneous colour and texture, the nutritive particles being contrasted with the body substance in respect of one or more of colour, shape, size, texture, or the like.

The nutritive particles may simulate red meat morsels or fragments, white meat morsels or fragments, rice grains, or the like. The nutritive particles may be flavoured commensurately with the entity they simulate.

In an embodiment, the body has a core that is free of nutritive particles. The nutritive particles may be adapted to simulate a protein source such as a red or white meat, poultry or fish, or a grain.

The invention provides further for a method of forming a foodstuff for pets or other animals, including forming a base or slab of a body substance, distributing nutritive particles which are in contrast with the body substance on a surface of the base or slab, embedding the particles in the base or slab to be visibly exposed at said surface and covering between one fifth and four fifths of said surface and forming foodstuff elements from the base or slab.

The method may include forming a slab of large area of the body substance, then distributing and embedding said nutritive particles and then forming individual foodstuff elements from the slab, e.g. by means of stamping or cutting. The method may include flavouring the nutritive particles prior to distributing them over the slab.

The method may include rolling the distributed nutritive particles into the body substance such that they are fully embedded in the slab and thus flush with the general outer surface, yet fully visible.

The method may include baking or cooking the body substance and embedded nutritive particles when said foodstuff elements have been formed.

In accordance with a third aspect of this invention, there is provided a packaged foodstuff for pets or other animals including a plurality of foodstuff elements as herein described, packaging material having markings identifying the foodstuff being simulated by the nutritive particles to a buyer.

The invention further provides a method of enabling a pet owner to associate a flavour visibly with a foodstuff for feeding to a pet. The method comprises the steps of providing a pet food product comprising a food body, the food body having embedded in its surface a plurality of visibly contrasting particles, which at least simulate a desired nutritional element and are capable of evoking an association with a known flavour, and making the product available to pet owner.

In an embodiment, the association is one of chicken with a pale substance such as rice and red meat such as beef with a reddish coloured particle. The method may include flavouring the particles to enhance the association by odour.

### Brief description of drawings

The invention is now described by way of example with reference to the accompanying diagrammatic drawings. In the drawings
Figures 1, 2 and 3 on sheet 2 of the drawings show one embodiment of a foodstuff for pets in the form of a biscuit in accordance with the invention, respectively in three dimensional view, top plan view and bottom plan view;
Figures 4, 5 and 6 on sheet 3 of the drawings show, in corresponding views, another embodiment of a foodstuff for pets in the form of a biscuit in accordance with the invention.
Figure 7 on sheet 1 of the drawings is a schematic block diagram illustrating a process of manufacture for foodstuffs of the preceding figures.

### Detailed description of embodiments

The invention relates to a dried pet food product in the form of a body such as a biscuit and to a means for manufacturing it. Nutritive particles are provided to be visible on at least part of the surface of the body. The nutritive particles may comprise actual nutritive substances, or may merely simulate such nutrients or nutritive substances. In the latter case, they may include a flavouring or a colouring to increase odiferous and visual resemblance to the nutritive substance being simulated. Where they simulate nutritive entities, these may be present throughout the body. However, they may be located to be embedded at the surface, leaving a core portion free of them.

Any edible particle that is sufficiently visually different from the material of the body substance may be utilised in the invention. It should thus be sufficiently large to be clearly visible as a discrete particle, rather than a coating of powder-like particles. Suitable nutritive particles may for example include texturized vegetable protein (TVP) particles which may be coloured and/or flavoured to create a desired association with a different nutritive substance, for example red meat morsels, that are being simulated. Other examples include grains, such as rice and the like. In certain embodiments, however, it may be desirable to provide unsimulated nutritive particles, such as real meat morsels or real chicken.

The biscuit is of relatively large dimension compared with the nutritive particles. Moreover, the biscuit may be of differing sizes, according to the nature of the animal, so that relatively large biscuits would be better suited to being fed to a large breed of dog, as a treat or meal supplement. It may be provided in any specific shape thought or found to be attractive to the animal intended to consume it - for example as a bone for a dog, or as a fish for a cat. In the case where the biscuit is of smaller dimension, it is more likely to be in the form of a kibble or a pellet, in which case it would likely be fed as one of a plurality of such bodies, together providing a complete meal. Nutritional balance in such kibbles is therefore an important advantage.

The dried pet food bodies of the invention may include any one or more of a starch source, a protein source and lipid source.

Suitable starch sources are, for example, grains and legumes such as corn, rice, wheat, barley, oats, soy, and mixtures of these.

Suitable protein sources may be selected from any suitable animal or vegetable protein source; for example meat and meal, poultry meal, fish meal, soy protein concentrates, milk proteins, gluten, and the like.

Suitable lipid sources include meats, animal fats and vegetable fats.

The choice of the starch, protein and lipid sources will be largely determined by the nutritional needs of the animal, palatability considerations, and the type of product applied. For elderly pets, the pet food preferably contains proportionally less fat than pet foods for younger pets.

Further, various other ingredients, for example, sugar, salt, spices, seasonings, vitamins, minerals, flavouring agents, fats and the like may also be incorporated into the pet food as desired.

The food body or biscuit products may be produced by any suitable process for manufacturing a dry pet food product. Examples are extrusion cooking and baking.

When extrusion cooked, the dried pet food that results is generally referred to as a kibble or pellet. The nutritive particles may be mixed with the other ingredients of the composition prior to processing. Ingredients and a suitable process are described in European patent application No 0850569. If a probiotic mico-organism is used and activity is desired in the final product, the organism is best coated onto or filled into the dried pet food after extrusion cooking. Again, ingredients and a suitable process are described in European patent application No 0862863.

The nutritive particles may optionally comprise a nutritional agent or active ingredient, for purposes of providing the pet with a desired nutritional benefit. By way of illustrative example, the particle may include an antioxidant as an active ingredient for the amelioration of ageing effects, or oxidative stress conditions. In another example, it may comprise an active probiotic, for the purpose of regulating microfloral balance and improving nutrient absorption, in which case it may be incorporated therein by encapsulation and fixed to the extrudate by being embedded in the surface of the body substance prior to final hardening, for example by baking. Encapsulation of the probiotic micro-organism may be; for example, in a sugar matrix, fat matrix or polysaccharide matrix. Where it is not required that the probiotic particles remain active - in other words where metabolites or supernatant moieties of its culture are acceptable or desired - then these may be added to the pre-extrusion mix and extrusion cooked with the remainder of the composition. However, sufficient agglomerates of such moieties - whether or not encapsulated - are required to be provided in the premix so that sufficient of them are visible at the surface of the final dried product, post-extrusion.

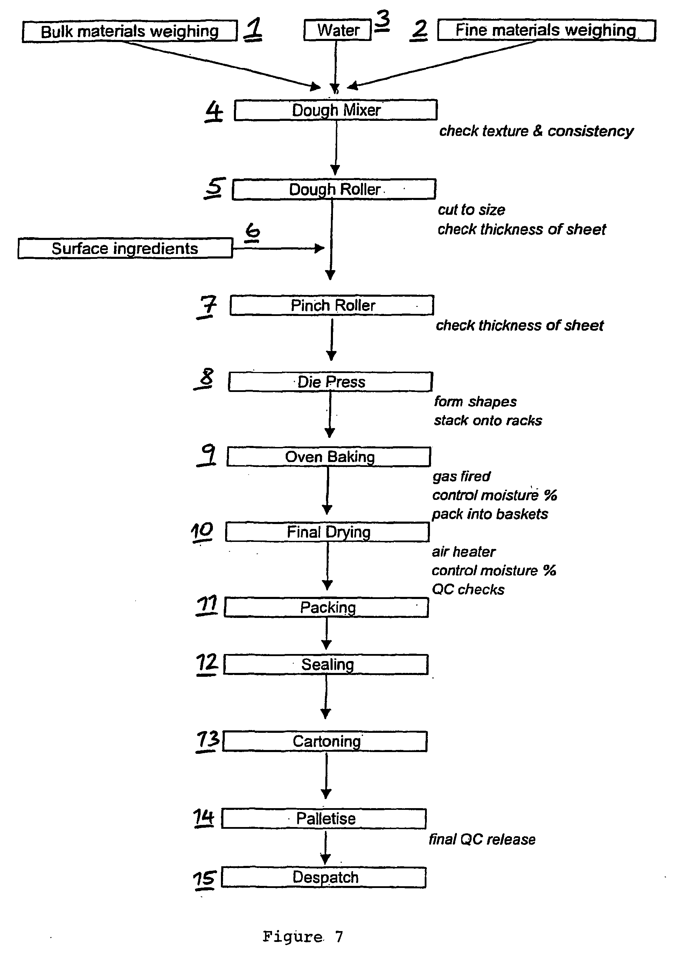

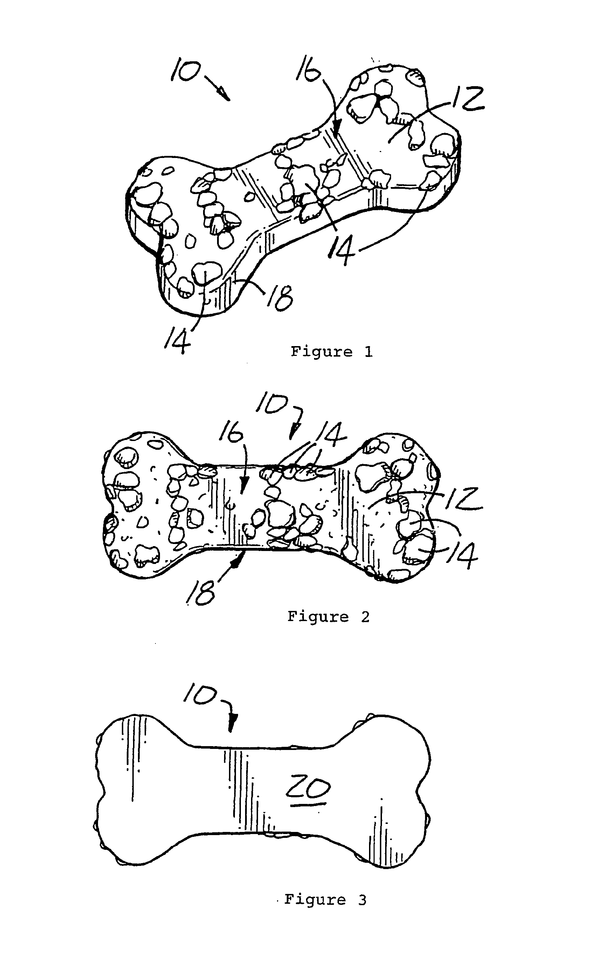

With reference to Figures 1, 2 and 3 of the drawings, a first embodiment of a pet biscuit is generally indicated by reference numeral 10. The pet biscuit 10 is in a form simulating a two dimensional bone, and it is intended for dogs or puppies. In other embodiments, different sizes and shapes may be used and the body may be two or three dimensional.

The pet biscuit 10 comprises a body of homogenous body substance. Formulation of the body substance will be described below. The body 12 has an upper face 16.

In accordance with the invention, a large plurality of nutritive particles 14 are scattered or distributed over the face 16, and are embedded into the homogenous body substance 12 to be visibly exposed at the face 16.

The nutritive particles 14 are contrasted with the body 12 of homogenous body substance, in this embodiment, in respect of colour, texture, shape and size. Whereas the body substance 12 has a generally light brown or khaki colour of relatively fine structure, the nutritive particles 14 simulate morsels of red meat, i.e. beef. They are of relatively course, fibrous texture compared to the body substance. The nutritive particles 14 have a reddish brown colour simulating that of beef morsels. Furthermore, the nutritive particles 14 are of irregular nodule shape and size in contrast with the relatively large, regular shape of the body 12.

The pet biscuit 10, exemplified in this drawing, has a regular, relatively sharp, edge 18 and a smooth bottom 20. Neither the edge 18, nor the bottom 20 has nutritive particles embedded therein. However, in other embodiments, faces other than the upper face 12 may be embedded with nutritive particles. The edges in such other embodiments may optionally be less sharp.

Generally, the pet biscuit 10 thus has a stylized, two dimensional bone shape with the exposed nutritive particles contrasted as mentioned above with the homogenous body substance forming the body 12, the nutritive particles simulating morsels of a red meat, such as beef.

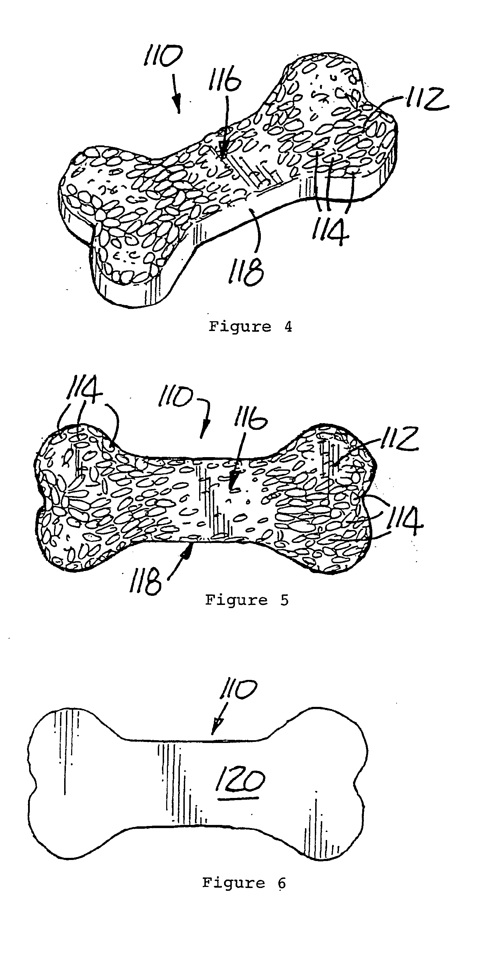

With reference to Figures 4, 5 and 6, another embodiment of a pet biscuit 110 has a body 112 virtually identical to the body 12 of Figures 1, 2 and 3. It also has other features in common which are indicated by like reference numerals. Thus, the embodiment of Figures 4, 5 and 6 is not described in detail, but emphasis is placed merely upon a single prominent difference.

The pet biscuit 110 has nutritive particles 114 embedded in the body 112 of homogenous body substance to be visibly exposed. The nutritive particles 114 simulate rice grains or other grains. In another embodiment, the rice seed simulating nutritive particles are interspersed with nodules simulating morsels of white meat such as chicken.

In yet further embodiments the nutritive particles may simulate other foodstuffs which are tasty to pets and other animals, like steak and vegetables, milk and rice, and the like.

It is to be appreciated that, in preferred embodiments, the nutritive particles are flavored commensurately with the foodstuff or foodstuffs they simulate, thus, the beef will be beef flavoured, steak and vegetables will be steak and vegetables flavoured, and the like.

### Example 1

A general dog biscuit manufacturing process is graphically illustrated in Figure 7. The vast majority of process steps are conventional, are easily understood by a person skilled in the art, and are merely mentioned in Figure 7 in short form without being described.

With reference to Figure 7, conventional bulk materials (1) and conventional fine materials (2) to form the body substance are weighed and added with water (3) into a dough mixer (4) for mixing. The mixture is rolled in a dough roller into a slab. In accordance with the invention, the nutritive particles or surface ingredients (6) are sprinkled or otherwise distributed over an upper face of the slab after which the nutritive particles or surface ingredients (6) are rolled into the slab by means of a pinch roller (7) which simultaneously renders the slab of predetermined thickness. The individual biscuit elements are cut or stamped from the slab to the desired size and shape (8) and stacked onto racks for oven baking (9) whereafter the biscuits are dried (10), packed (11), sealed (12) into cartons (13) which are moved onto pallets (14) for despatch (15). Quality control checks are conducted throughout the manufacturing process.

Various formulations for use in the manufacturing process described above are reflected respectively in the following table.

**TABLE**

| **Product profile>** | **Senior Wt%** | **Adult Wt%** | **Puppy Wt%** |
|---|---|---|---|
| **COMPONENT** | | | |
| Brown Flour | 35 | 38 | 34 |
| Maize Meal | 11 | 15 | 6 |
| Yeast Food | 1 | ---- | 1.2 |
| Meat & Bone Meal | 2 | 2 | 4 |
| Hog Fat/Lard | 4 | 3 | 6 |
| Bone Meal | 3 | 3 | 3 |
| Milled Wheat | 33 | 34 | 35 |
| Chicken Digest | 2 | ---- | ---- |
| Skimmed Milk | ---- | ---- | 0.7 |
| Rice | 5 | ---- | 6 |
| Colors, Flavors, Vitamins, Texturiser, Salt | 4 | 5 | 4 |

It is to be appreciated that the working examples are given by way of examples only and are not limiting the scope of the invention.

### Example 2

A feed mixture is made up of about 58% by weight of corn, about 6% by weight of corn gluten, about 23% by weight of chicken meal, with salts, vitamins and minerals making up the remainder.

The feed mixture is fed into a preconditioner and moistened. The moistened feed is then fed into an extruder-cooker and gelatinised. The gelatinised matrix leaving the extruder is forced through a die and extruded. Nutritive particles of rice bathed in chicken stock are cascaded onto the extrudate before it hardens. It passes through a pinch roller where the particles are caused to be embedded into the surface. The extrudate bearing the nutritive rice particles is then cut into pieces suitable for feeding to cats, dried at about 110°C for about 20 minutes, and cooled to form pellets.

It is believed that pet owners will regard it as an advantage to see visibly nutritive particles forming part of the biscuits and pellets they provide for their pets, and to be able, visually, to associate a flavour with the foodstuff. The association may be enhanced or reinforced by flavouring the particles consistently with the desired visual association, for example by adding chicken stock to flavour chicken-like particles and beef stock for beef-like particles.

## Claims

1. A foodstuff for pet animals which foodstuff is in the form of a biscuit including a body of a body substance having a core, a surface zone at least partially surrounding the core, and nutritive particles visibly in contrast with the body substance embedded in distributed relationship in the surface zone to be visibly exposed at at least one surface of the body and covering between one-fifth and four-fifths of said surface, the core of the body substance being homogenous.

2. A foodstuff according to claim 1 wherein the particles are fully embedded such that they, generally, do not protrude from an outer surface of the body.

3. A foodstuff according to claim 1 or claim 2 wherein the nutritive particles are relatively small in cross section compared to a cross dimension of the said surface.

4. A foodstuff according to any one of claims 1 to 3 wherein the body substance is of homogenous colour and texture, the nutritive particles being contrasted with the body substance in respect of one or more of colour, shape, size and texture.

5. A foodstuff according to any one of claims 1 to 4 wherein the nutritive particles simulate a predetermined nutrient, such as in respect of any one or more of colour, shape, size and texture.

6. A foodstuff according to claim 5 wherein the nutritive particles simulate red meat morsels or fragments, white meat morsels or fragments, or rice grains.

7. A foodstuff according to claim 5 or claim 6 wherein the nutritive particles are flavoured commensurately with the nutritive entity they simulate.

8. A foodstuff according to any one of the preceding claims wherein the nutritive particle comprises a probiotic micro-organism or a supernatant of its culture or a metabolite thereof.

9. A method of forming a foodstuff for pets including forming a base or slab of a body substance, distributing nutritive particles which are in contrast with the body substance on a surface of the base or slab, embedding the particles in the base or slab to be visibly exposed at said surface and covering between one-fifth and four-fifths of said surface, and forming foodstuff elements from the base or slab.

10. A method according to claim 9 including forming a slab of large area of the body substance, distributing and embedding said nutritive particles and then forming individual foodstuff elements from the slab.

11. A method according to claim 9 or 10 including flavouring the nutritive particles.

12. A method according to claim 11 wherein the particles are flavoured prior to distributing them over the slab.

13. A method according to any one of claims 9 to 12 including rolling the distributed nutritive particles into the body substance such as to fully embed them in the slab and thus flush with the general outer surface.

14. A method according to any one of claims 9 to 12 including baking or cooking the body substance and embedded nutritive particles when said foodstuff elements have been formed.

15. A method of enabling a pet owner to associate a flavour visually with a foodstuff for feeding to a pet, the method comprising providing a pet food product according to any one of claims 5 to 8, the nutritive particles of the product being capable of evoking in an owner of said pet an association between the nutritive entity and a known flavour, and making the product available to said pet owner.

16. A method according to claim 15 wherein the particles are selected to simulate any one or more of red meat, poultry and grain particles.

17. A method according to claim 15 or claim 16 wherein the particles comprise an active ingredient capable of providing a desired nutrition-related benefit to the pet ingesting it.

18. A packaged foodstuff for a pet animal comprising packaging material and a plurality of dried foodstuffs according to any one of claims 1 to 8, the packaging material having markings identifying to a buyer the nutritional entity being simulated.

## Patentansprüche

1. Nahrungsmittel für Haustiere, welches in der Form eines Hundekuchens vorliegt, umfassend, einen Körper aus einer Körpersubstanz mit einem Kern, einen den Kern mindestens teilweise umgebenden Oberflächenbereich, und nahrhafte Teilchen, die gegenüber der Körpersubstanz in einem verteilten Verhältnis in dem Oberflächenbereich sichtbar eingebettet sind, um an mindestens einer Oberfläche des Körpers sichtbar exponiert zu sein und zwischen einem Fünftel und Vier-Fünftel der Oberfläche bedecken, wobei der Kern der Körpersubstanz einheitlich ist.

2. Nahrungsmittel nach Anspruch 1, worin die Teilchen vollständig eingebettet sind, so dass sie gewöhnlich nicht aus einer äußeren Oberfläche des Körpers vorragen.

3. Nahrungsmittel nach Anspruch 1 oder Anspruch 2, worin die nahrhaften Teilchen verglichen zu einer Querabmessung der Oberfläche einen relativ kleinen Querschnitt aufweisen.

4. Nahrungsmittel nach einem der Ansprüche 1 bis 3, worin die Körpersubstanz eine einheitliche Farbe und Textur aufweist, wobei die nahrhaften Teilchen von der Körpersubstanz bezüglich einem oder mehreren von Farbe, Form, Größe und Textur, verschieden sind.

5. Nahrungsmittel nach einem der Ansprüche 1 bis 4, worin die nahrhaften Teilchen einen bestimmten Nährstoff hinsichtlich irgendeines oder mehrerer von Farbe, Form, Größe und Textur simulieren.

6. Nahrungsmittel nach Anspruch 5, worin die nahrhaften Teilchen rote Fleischhappen oder Fragmente, weiße Fleischhappen oder Fragmente oder Reiskörner, simulieren.

7. Nahrungsmittel nach Anspruch 5 oder Anspruch 6, worin die nahrhaften Teilchen entsprechend der sie simulierenden nahrhaften Entität angemessen gewürzt sind.

8. Nahrungsmittel nach einem der vorstehenden Ansprüche, worin das nahrhafte Teilchen einen probiotischen Mikroorganismus oder einen Überstand dessen Kultur oder einen Metaboliten davon, umfasst.

9. Verfahren zur Herstellung eines Nahrungsmittels für Haustiere umfassend, Herstellen einer Basis oder einer Scheibe einer Körpersubstanz, Verteilen nahrhafter Teilchen, die sich von der Körpersubstanz an einer Oberfläche der Basis oder Scheibe unterscheiden, Einbetten der Teilchen in die Basis oder die Scheibe, um an der Oberfläche sichtbar ausgesetzt zu sein und zwischen einem Fünftel und Vier-Fünftel der Oberfläche zu bedecken, und Herstellen von Nahrungsmittelelementen aus der Basis oder der Scheibe.

10. Verfahren nach Anspruch 9 umfassend, Herstellen einer großflächigen Scheibe der Körpersubstanz, Verteilen und Einbetten der nahrhaften Teilchen und anschließend Herstellen einzelner Nahrungsmittelelemente aus der Scheibe.

11. Verfahren nach Anspruch 9 oder 10 umfassend, Würzen der nahrhaften Teilchen.

12. Verfahren nach Anspruch 11, wobei die Teilchen gewürzt werden, bevor sie über der Scheibe verteilt werden.

13. Verfahren einem der Ansprüche 9 bis 12 umfassend, Rollen der verteilten nahrhaften Teilchen in die Körpersubstanz, so dass sie vollständig in der Scheibe eingebettet sind und daher mit der allgemeinen Außenfläche bündig vorliegen.

14. Verfahren nach einem der Ansprüche 9 bis 12 umfassend, Backen oder Kochen der Körpersubstanz und eingebetteter nahrhafter Teilchen, wenn die Nahrungsmittelelemente gebildet wurden.

15. Verfahren einem Haustierbesitzer zu ermöglichen einem Nahrungsmittel zum Verfüttern an ein Haustier bei Inaugenscheinnahme einen Geschmack zuzuordnen, wobei das Verfahren umfasst, Bereitstellen eines Haustiernahrungsprodukts gemäß einem der Ansprüche 5 bis 8, wobei die nahrhaften Teilchen des Produkts in einem Haustierbesitzer eine Assoziation zwischen der Nahrungsentität und einem bekannten Geschmack hervorrufen können, und Bereitstellen des Produktes dem Haustierbesitzer.

16. Verfahren nach Anspruch 15, wobei die Teilchen ausgewählt sind, um irgendeines oder mehrere von roten Fleisch-, Geflügel- und Körnerteilchen zu simulieren.

17. Verfahren nach Anspruch 15 oder Anspruch 16, wobei die Teilchen einen aktiven Bestandteil umfassen, der dem Haustier, das ihn aufnimmt, einen erwünschten Nahrungs-zugehörigen Nutzen bereitstellen kann.

18. Verpacktes Nahrungsmittel für ein Haustier umfassend, Verpackungsmaterial und mehrere getrocknete Nahrungsmittel gemäß einem der Ansprüche 1 bis 8, worin das Verpackungsmaterial Kennzeichnungen aufweist, die einem Käufer die simulierte Nahrungsentität anzeigt.

## Revendications

1. Aliment pour animaux domestiques, lequel aliment se présente sous la forme d'un biscuit comprenant un corps d'une substance de corps comportant un coeur, une zone de surface entourant au moins en partie le coeur, et des particules nutritives faisant visiblement contraste avec la substance de corps enrobées en étant réparties dans la zone de surface et recouvrant entre 1/5 et 4/5 de ladite surface, le coeur de la substance de corps étant homogène.

2. Aliment selon la revendication 1, dans lequel les particules sont complètement enrobées de manière que, généralement, elles ne font pas saillie à une surface externe du corps.

3. Aliment selon la revendication 1 ou la revendication 2, dans lequel les particules nutritives sont relativement petites en section transversale par comparaison avec une dimension transversale de ladite surface.

4. Aliment selon l'une quelconque des revendications 1 à 3, dans lequel la substance de corps a une couleur et une texture homogènes, les particules nutritives faisant contraste avec la substance de corps pour ce qui est de l'une ou de plusieurs des caractéristiques suivantes : couleur, forme, dimension et texture.

5. Aliment selon l'une quelconque des revendications 1 à 4, dans lequel les particules nutritives simulent un nutriment prédéterminé, par exemple eu égard à l'une ou plusieurs des caractéristiques suivantes : couleur, forme, dimension et texture.

6. Aliment selon la revendication 5, dans lequel les particules nutritives simulent des fragments ou morceaux de viande rouge, des fragments ou morceaux de viande blanche, ou des grains de riz.

7. Aliment selon la revendication 5 ou la revendication 6, dans lequel les particules nutritives sont aromatisées en fonction de l'entité nutritive qu'elles simulent.

8. Aliment selon l'une quelconque des revendications précédentes, dans lequel les particules nutritives comprennent un micro-organisme probiotique ou un surnageant de sa culture ou un métabolite de celui-ci.

9. Procédé pour former un aliment pour animaux domestiques comprenant les opérations consistant à former une base ou un bloc d'une substance de corps, répartir des particules nutritives qui font contraste avec la substance de corps sur une surface de la base ou du bloc, enrober les particules dans la base ou le bloc pour qu'elles soient visiblement exposées à ladite surface et recouvrent entre 1/5 et 4/5 de ladite surface, et former des éléments d'aliments à partir de la base ou du bloc.

10. Procédé selon la revendication 9 comprenant la formation d'un bloc de grande superficie de la substance de corps, la répartition et l'enrobage desdites particules nutritives puis la formation des éléments d'aliments individuels à partir du bloc.

11. Procédé selon la revendication 9 ou 10, comprenant l'aromatisation des particules nutritives.

12. Procédé selon la revendication 11, dans lequel les particules sont aromatisées avant d'être réparties sur le bloc.

13. Procédé selon l'une quelconque des revendications 9 à 12, comprenant l'opération consistant à rouler les particules nutritives réparties dans la substance de corps afin de les enrober complètement dans le bloc et qu'elles soient donc de niveau avec la surface externe générale.

14. Procédé selon l'une quelconque des revendications 9 à 12, comprenant la cuisson ou la cuisson au four de la substance de corps et des particules nutritives enrobées lorsque lesdits éléments d'aliments ont été formés.

15. Procédé pour permettre à un propriétaire d'animal domestique d'associer visuellement un arôme à un aliment pour nourrir un animal domestique, le procédé comprenant la fourniture d'un produit alimentaire pour animaux domestiques selon l'une quelconque des revendications 5 à 8, les particules nutritives du produit pouvant suggérer à un propriétaire dudit animal domestique une association entre l'entité nutritive et un arôme connu, et la mise à disposition du produit pour ledit propriétaire d'animal domestique.

16. Procédé selon la revendication 15, dans lequel les particules sont sélectionnées pour simuler un ou plusieurs éléments parmi les suivants : viande rouge, volaille et particules de céréales.

17. Procédé selon la revendication 15 ou la revendication 16, dans lequel les particules comprennent un ingrédient actif pouvant offrir un bénéfice souhaité en matière de nutrition à l'animal domestique l'ingérant.

18. Aliment emballé pour animal domestique comprenant le matériau d'emballage et une pluralité d'aliments secs selon l'une quelconque des revendications 1 à 8, le matériau d'emballage comportant des indications pour qu'un acheteur identifie l'entité nutritionnelle étant simulée.
